# EUROPEAN PATENT APPLICATION

(11) **EP 1 804 362 A2**
(43) Date of publication of application: **04.07.2007**
(21) Application number: 06026861.2
(22) Date of filing: 23.12.2006
(51) Int. Cl.: H02K 7/14

(54) **Motor device utilizing magnetic force to drive a rotor for pumping a fluid**

(30) Priority: 30.12.2005 CN 200510135539
(71) Applicant: LIU, Ming-Hwa, Taiwan (TW); CHEN, Brian D.F., Taiwan (TW); Chien, Chin-Pang, Chia Yih Hsien (TW)
(72) Inventor: LIU, Ming-Hwa, Taiwan (TW); CHEN, Brian D.F., Taiwan (TW); Chien, Chin-Pang, Chia Yih Hsien (TW)
(74) Representative: Reichel, Wolfgang

(57) **Abstract**

The present invention relates to a motor device utilizing magnetic force to drive a rotor (12). The motor device includes a main body (11), a rotor (12) and a controlling unit (13). The main body has two openings (111) and an internal chamber (112). The rotor (12) is magnetic and swingably disposed in the chamber (112) between the two openings (111). The controlling unit (13) is disposed on outer side of the main body (11) to apply a magnetic force to the rotor (12) for driving the rotor (12) to at least rotate. The rotor (12) is a column body with a certain length. The rotor (12) has a profile corresponding to a configuration of a peripheral wall of the chamber (112). The outer face of the rotor (12) is formed with at least one spiral groove (121) to define at least one spiral stripe (122). The rotor (12) is magnetically driven to drive a fluid to flow from one opening (111) to the other opening (111).

## Description

### BACKGROUND OF THE INVENTION

The present invention is related to a motor device, and more particularly to a motor device utilizing magnetic force to drive a rotor for driving a fluid.

A conventional pump device serves to drive a fluid to flow within a pipeline. The pump device generally includes a waterwheel or a cylinder communicating with a pipeline. The waterwheel or the cylinder is externally connected with a motor. The motor operates to rotate the waterwheel or reciprocate the cylinder for driving the fluid within the pipeline. Accordingly, the fluid can circularly flow between two positions or transfer from a position to another position.

The motor can be a brushless one or a brush motor. Basically, the output power of the brush motor is smaller than the output power of the brushless motor, while the structure and controlling circuit of the brushless motor are more complicated than the structure and controlling circuit of the brush motor.

The above conventional pump device is equipped with the motor so that much room is occupied and the cost is relatively high. In general, one single pump device is arranged for one single pipeline system. However, in some cases, one single pump device is arranged for more than one pipeline system. Under such circumstance, it is necessary to arrange multiple switch valves or check valves on the pipeline systems. In such case, the cost is still high and it is inconvenient to use the pump device.

U.S. Patent No. 6,364,003 of this applicant discloses a measure for driving fluids. Five magnets are disposed in chamber perforated with several openings. A coil with alternate current is used to drive one of the magnets to reciprocally move, whereby two fluids are alternately driven. Such measure is applicable to a liquid cooling system or phase transformation cooling system. Especially, by means of such measure, the environmental cold air can be sucked in to serve as a coolant. When assembled, the five magnets are arranged with the poles of the same polarity directed to each other.

### SUMMARY OF THE INVENTION

It is therefore a primary object of the present invention to provide a motor device utilizing magnetic force to drive a rotor. The motor has a brushless structure and equipped with a non-conventional wheel blade type or piston type pump. The using life of the motor is prolonged and the efficiency of the motor is better.

It is a further object of the present invention to provide the above motor device, in which one single rotor and few components are used for driving a fluid.

It is still a further object of the present invention to provide the above motor device which has simple structure and includes fewer components to form a brushless power structure.

According to the above objects, the motor device utilizing magnetic force to drive the rotor of the present invention includes a main body, a rotor and a controlling unit. The main body has two openings and an internal chamber. The rotor is magnetic and swingably disposed in the chamber between the two openings. The controlling unit serves to apply a magnetic force to the rotor for driving the rotor. The rotor is a column body with a certain length. The outer face of the rotor is formed with at least one spiral groove to define at least one spiral stripe.

The present invention can be best understood through the following description and accompanying drawings wherein:

### BRIEF DESCRIPTION OF THE DRAWINGS

Fig. 1 is a perspective exploded view of a first embodiment of the present invention;
Fig. 2 is a perspective assembled view of the first embodiment of the present invention;
Fig. 3 is a sectional view taken along line A-A of Fig. 2;
Fig. 4 is a perspective exploded view of a second embodiment of the present invention;
Fig. 5 is a perspective assembled view of the second embodiment of the present invention;
Fig. 6 is a sectional view taken along line B-B of Fig. 5;
Fig. 7 is a perspective exploded view of a third embodiment of the present invention;
Fig. 8 is a perspective exploded view of a fourth embodiment of the present invention;
Fig. 9 is a perspective assembled view of the fourth embodiment of the present invention;
Fig. 10 is a sectional view taken along line C-C of Fig. 9;
Fig. 11 is a perspective exploded view of a fifth embodiment of the present invention;
Fig. 12 is a perspective assembled view of the fifth embodiment of the present invention; and
Fig. 13 is a sectional view taken along line D-D of Fig. 12.

### DETAILED DESCRIPTION OF THE PREFERRED EMBODIMENTS

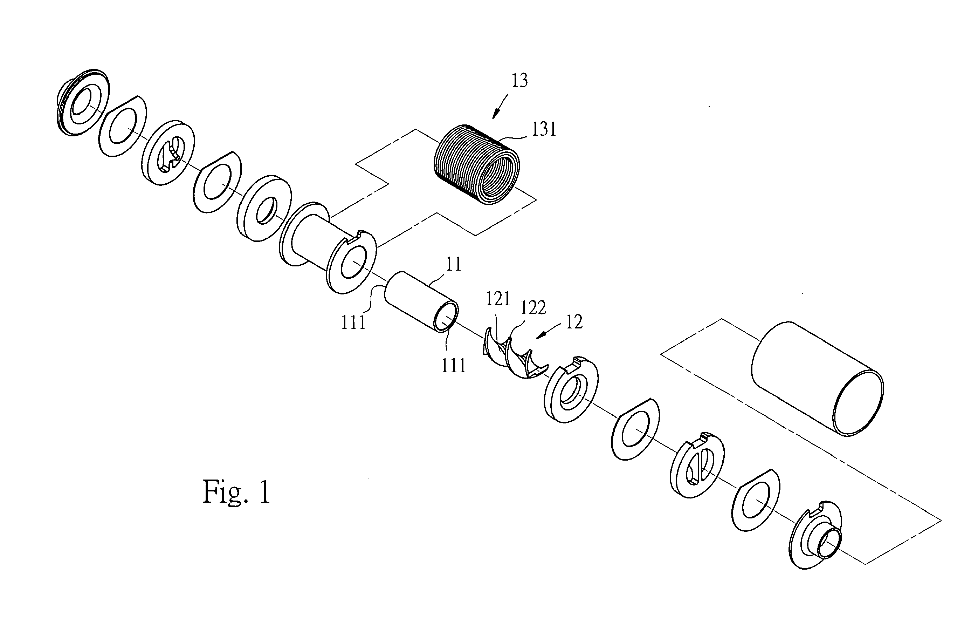

Please refer to Figs. 1 to 3. The motor device of the present invention includes a main body 11, a rotor 12 and a controlling unit 13.

The main body 11 has two openings 111 and an internal chamber 112 communicating with the two openings 111. In this embodiment, the main body 11 is a cylindrical tubular body with a certain length.

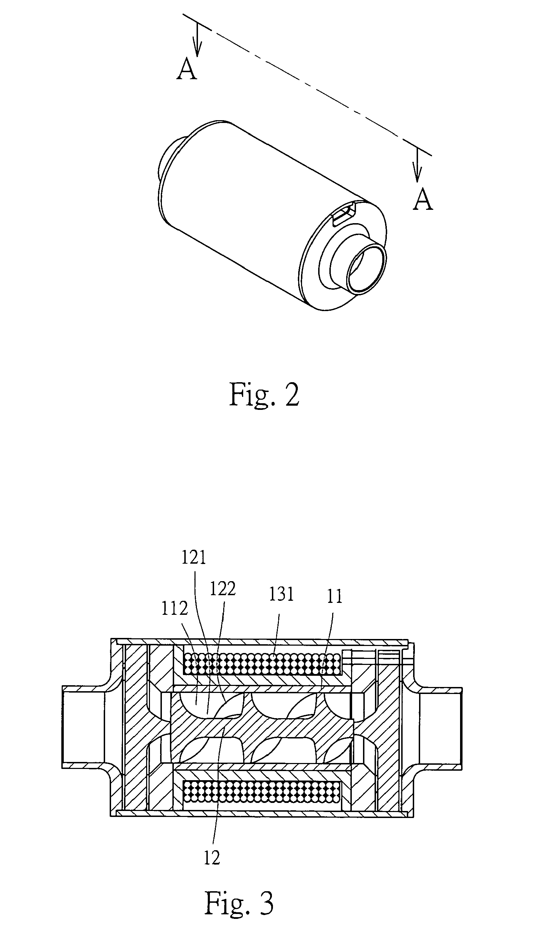

The rotor 12 is a column body or a cylindrical body with a certain length. The rotor 12 has a profile corresponding to the configuration of the peripheral wall of the chamber 112 and is swingably disposed in the chamber 112. The rotor 12 creates a magnetic field, whereby a magnetic force can be applied to the rotor 12. The outer face of the rotor 12 is formed with at least one spiral groove 121 to define at least one spiral stripe 122. The spiral groove 121 lengthwise extends from one end of the rotor 12 to the other end about the axis of the rotor 12 ( as shown in Fig. 3 ) to form the spiral stripe 122. The magnetic field of the rotor 12 can be one of the following two types:
1. The rotor 12 has at least one radial magnetic field, that is, the rotor 12 has up/down magnetic lines ( according to Fig. 3 ).
2. The spiral stripe 122 of the rotor 12 is magnetized to create a magnetic field.

The controlling unit 13 is disposed around the main body 11 to serve as function of a stator. The controlling unit 13 serves to apply a magnetic force to the rotor 12 for driving the rotor 12 to at least rotate. The controlling unit 13 includes at least one coil 131 connected to at least one circuit ( not shown ). The coil 131 is lengthwise wound around the main body 11 about the axis of the rotor 12. The circuit applies an alternate current to the coil 131, whereby the controlling unit 13 creates a time-varied magnetic field to cut across the magnetic field of the rotor 12. Accordingly, the rotor 12 is driven to rotate about its axis. The rotor 12 with the spiral groove 121 can thus drive a fluid to flow from one opening 111 to the other opening 111.

The cut across effect of the at least two magnetic fields of the present invention will make the rotor 12 rotate. The tangential direction of the winding coil 131 is normal to or oblique to the axis of the rotor 12 so as to achieve the cut across effect of the magnetic field.

The current applied to the coil 131 is switched at a preset time for driving the rotor 12. Alternatively, the controlling unit 13 can further include a Hall sensor for accurately detect the position of the rotor 12 by means of Hall effect. Accordingly, the rotor 12 can be driven at more proper time. This pertains to prior art and thus will not be further described hereinafter. Still alternatively, a conventional pulse width modulation ( PWM ) electronic driving circuit can be used to achieve higher effect.

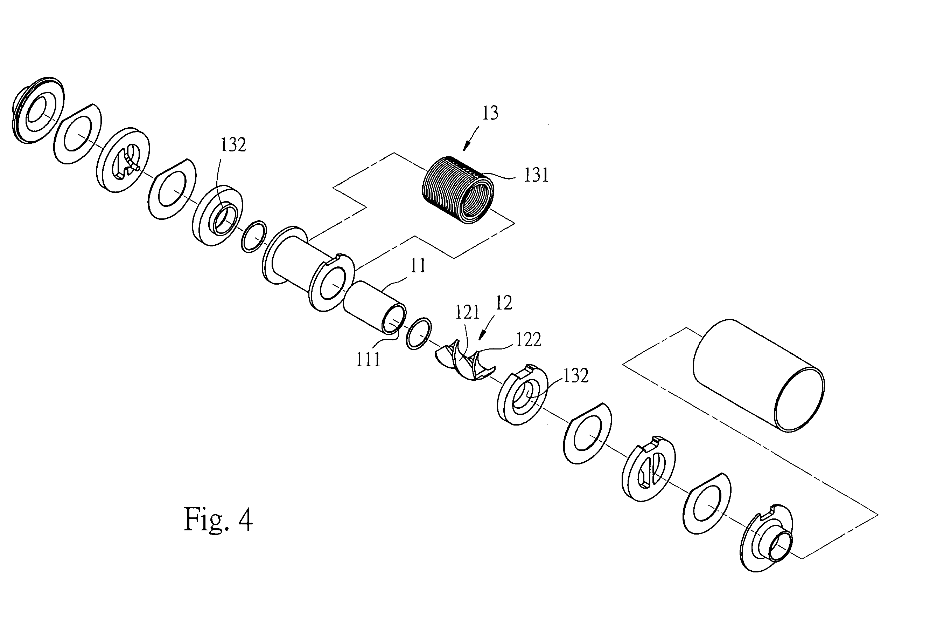

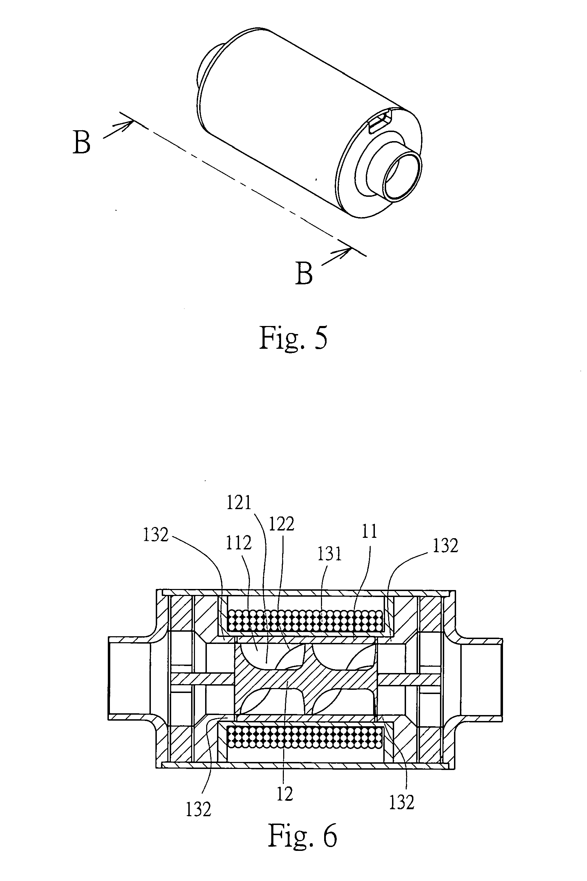

Referring to Figs. 4 to 6 show a second embodiment of the present invention, according to Fig. 1 in which the controlling unit 13 further includes at least one stator section 132 containing magnetizable material. The stator section 132 is adjacent to the rotor 12 and positioned between the coil 131 and the rotor 12. Due to the electromagnetic effect of the coil 131, the stator section 132 will create a time-varied magnetic field for more effectively driving the rotor 12.

The stator 132 can be a block body or a hollow cylindrical body positioned at one end of the rotor 12 between the coil 131 and the rotor 12.

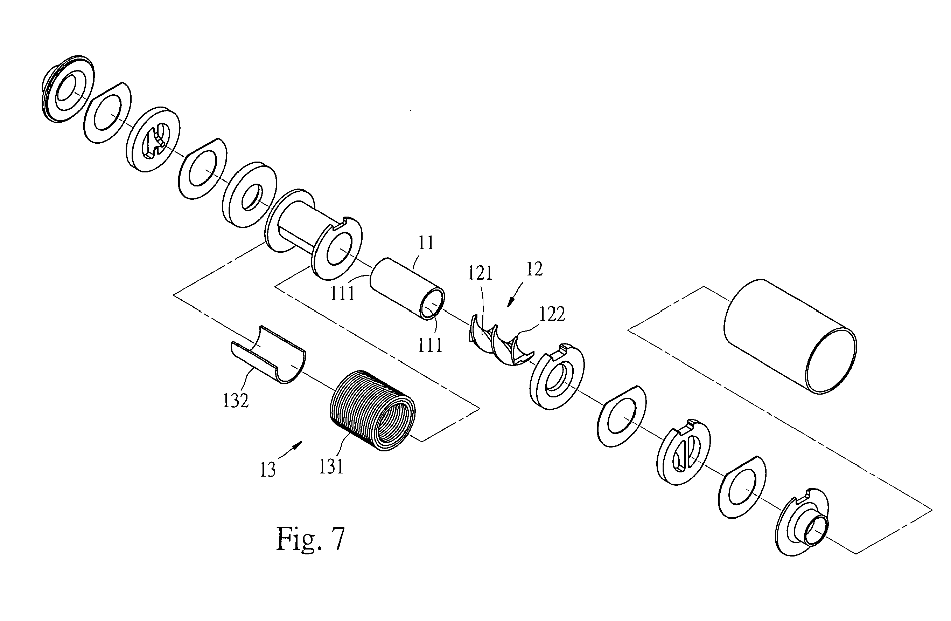

Fig. 7 shows a third embodiment of the present invention, according to Fig. 1 in which the stator 132 is a block body positioned on one side of the rotor 12 between the coil 131 and the rotor 12. This arrangement can also achieve the same effect. Furthermore, the stator section 132 can be formed as an arced piece to more effectively achieve the cut across effect of the magnetic field.

Certainly, two stator sections 132 can be respectively arranged at one end of the rotor 12 and on one side of the rotor 12 to achieve the same effect. Moreover, the stator section 132 arranged on one side of the rotor 12 can have a permanent magnetic field. The direction of the magnetic lines of the permanent magnetic field is different from the direction of the magnetic lines of the coil 131. Accordingly, the magnetic lines of the permanent magnetic field are guided by the magnetic lines of the stator section 132 at the end of the rotor 12 to compensate/strengthen the magnetic lines of the stator section 132 at the end of the rotor 12. Accordingly, the action force applied to the rotor 12 is enhanced. It should be noted that in the case further stator section 132 is arranged at the other end of the rotor 12, the direction of the magnetic lines of the permanent magnetic field is such arranged as to alternately compensate the magnetic lines of the two stator sections 132 at two ends of the rotor 12.

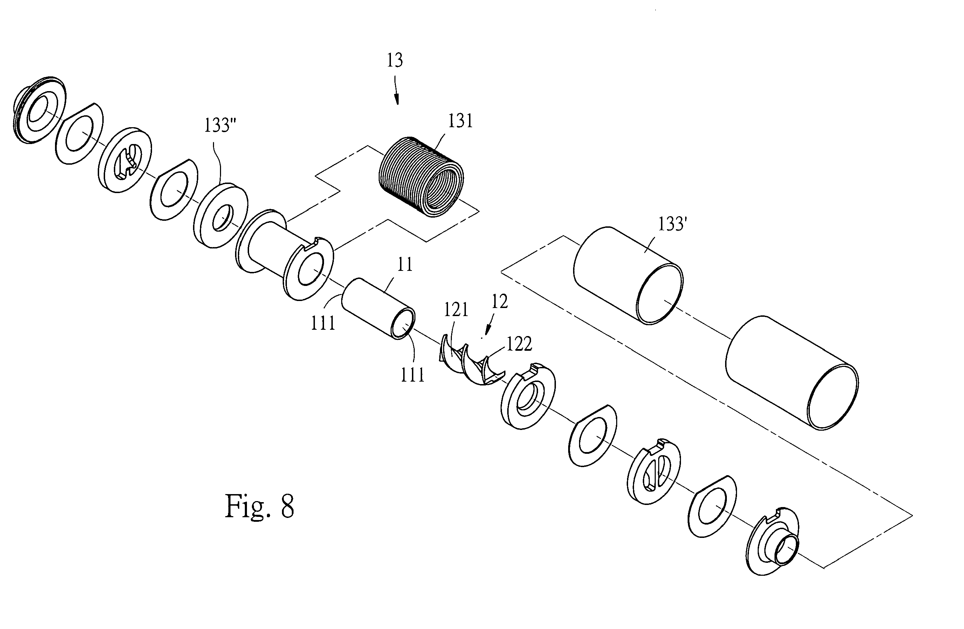

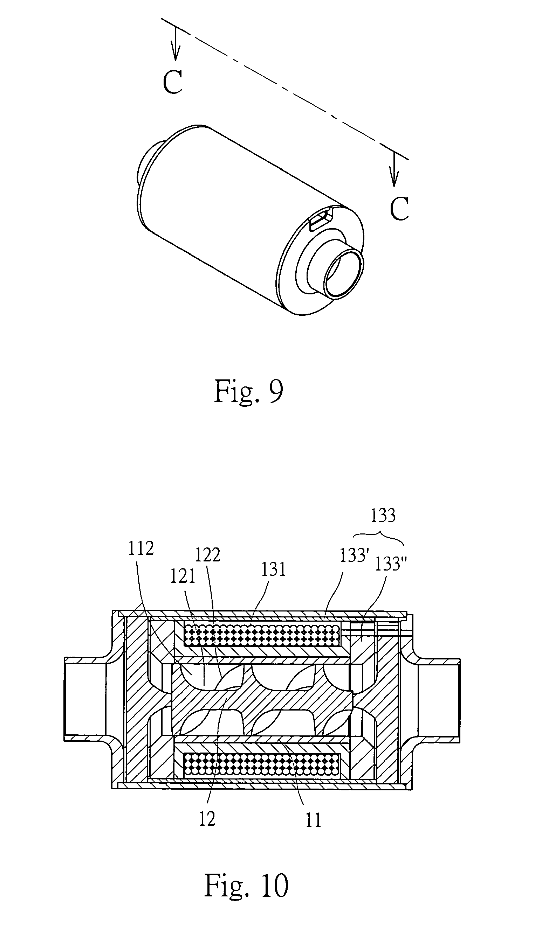

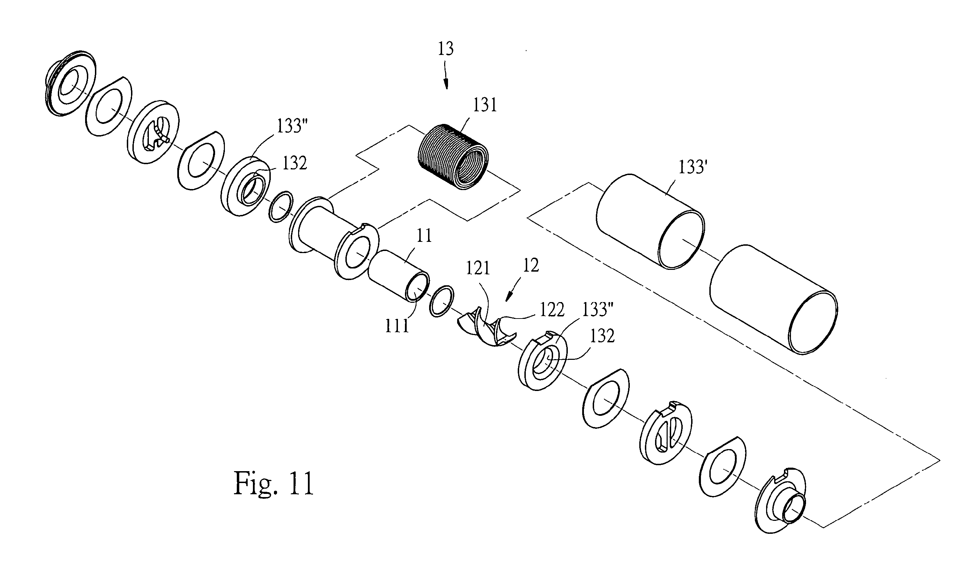

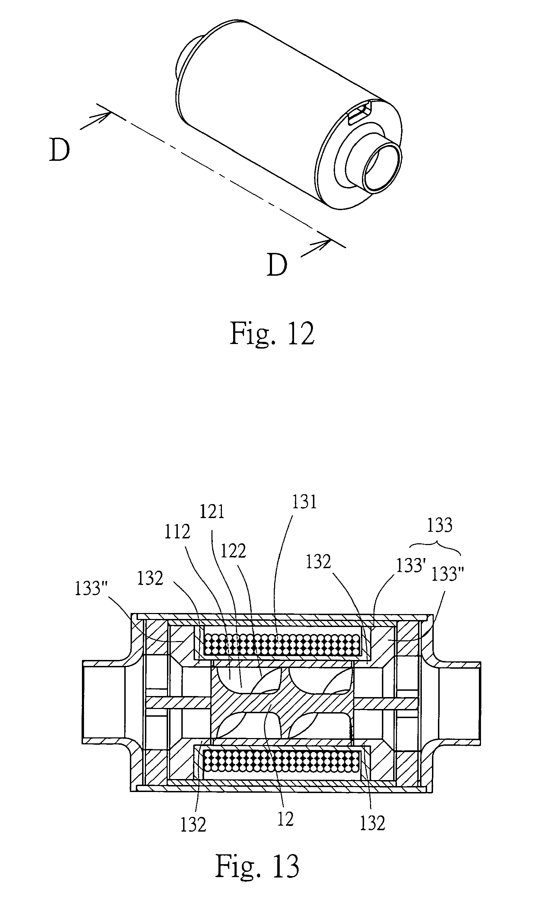

The controlling unit 13 of the motor device of the present invention further includes a compensator 133 positioned on outer side of the coil 131 for compensating the magnetic force acting on the rotor 12. The compensator 133 includes a first piece 133' and a second piece 133". The structures, properties and functions of the compensator 133 are described as follows:
A. Referring to Figs. 8 to 10, according to Fig. 1 further includes the compensator 133, the compensator 133 is made from a magnetic conductive material. The first piece 133' can be a block body, an arced piece or a hollow cylindrical body positioned on outer side of the coil 131 or around the coil 131. The second piece 133" is a hollow cylindrical body positioned at one end of the main body 11. The first piece 133' is connected with or abuts against the second piece 133", whereby the compensator 133 can effectively guide the magnetic lines of the coil 131 to act on the rotor 12.
B. The compensator 133 has a structure as described in A. However, the compensator 133 has a permanent magnetic field, whereby the magnetic lines of the compensator 133 can be effectively guided to act on the rotor 12. This is because in the case that the corresponding magnetic poles of the coil 131 and the compensator 133 are different from each other, the magnetic lines of the compensator 133 are guided by the magnetic lines of the coil 131 to compensate/strengthen the magnetic pole of the coil 131. In other words, two different magnetic poles intersect each other to shorten the magnetic paths and strengthen the magnetic force. The first piece 133' can be connected with or abut against the second piece 133" by means of magnetic attraction of different magnetic poles.
C. The compensator 133 has a structure as described in A. However, the first piece 133' of the compensator 133 has a permanent magnetic field, while the second piece 133" is made from a magnetic conductive material. Accordingly, the magnetic lines of the first piece 133' can be effectively guided to act on the rotor 12.
D. Referring to Figs. 11 to 13, according to Fig. 4 further includes the compensator 133, the compensator 133 has a structure, properties and functions as described in A, B and C. The stator section 132 at the end of the rotor 12 is connected with or abuts against the second piece 133".
E. According to Fig. 7 further includes the compensator 133, the compensator 133 has a structure, properties and functions as described in A, B and C. The stator section 132 on one side of the rotor 12 is not connected with the second piece 133". Furthermore, the stator section 132 or the first piece 133' has a permanent magnetic field. Accordingly, the magnetic lines of the stator section 132 or the first piece 133' can be effectively guided to act on the rotor 12.
F. In another embodiment, the structures and properties described in D and E can be combined. In other words, the aforesaid two stator sections 132 are included in the embodiment, whereby the magnetic lines can be effectively guided to act on the rotor 12.

According to the above arrangements, the motor device utilizing magnetic force to drive the rotor of the present invention has the following advantages:
1. In the present invention, the power section, transmission section and pump section of the conventional pump device are integrated to minimize the volume of the assembly.
2. It is convenient to assemble the components of the motor device.
3. It is unnecessary to arrange any switch valve or check valve on the externally connected pipeline system.

Alternatively, the rotor 12 of the motor device of the present invention can be free from the spiral stripe 12. Instead, the rotor 12 can be a column body or a cylindrical body with a certain length. In such case, the rotor 12 can still rotate to drive other units. On the other hand, in the case that the rotational axis of the rotor 12 does not coincide with the geometrical axis of the rotor 12 or the rotational axis of the rotor 12 does not coincide with the gravity axis of the rotor 12, the motor device of the present invention becomes a vibration motor.

The above embodiments are only used to illustrate the present invention, not intended to limit the scope thereof. Many modifications of the above embodiments can be made without departing from the spirit of the present invention.

## Claims

1. A motor device utilizing magnetic force to drive a rotor (12), comprising:
a main body (11) having two openings (111) and an internal chamber (112) communicating with the two openings (111);
a magnetic rotor (12) swingably disposed in the chamber (112) between the two openings (111), the rotor (12) being a column body with a certain length, the rotor (12) having a profile corresponding to a configuration of a peripheral wall of the chamber (112), outer face of the rotor (12) being formed with at least one spiral groove (121) to define at least one spiral stripe (122); and
a controlling unit (13) disposed on outer side of the main body (11) to apply a magnetic force to the rotor (12) for driving the rotor (12) to at least rotate.

2. The motor device utilizing magnetic force to drive the rotor (12) as claimed in claim 1, wherein the rotor (12) is a cylindrical body and the spiral groove (121) is formed on the rotor (12) about an axis of the rotor (12) to define the spiral stripe (122), the rotor (12) being rotatable about the axis.

3. The motor device utilizing magnetic force to drive the rotor (12) as claimed in claim 2, wherein the controlling unit (13) includes at least one coil (131) connected to at least one circuit, the coil (131) being wound around the main body (11) about the axis of the rotor (12), the circuit applying an alternate current to the coil (131).

4. The motor device utilizing magnetic force to drive the rotor (12) as claimed in claim 3, wherein the tangential direction of the winding coil (131) is oblique to the axis of the rotor (12).

5. The motor device utilizing magnetic force to drive the rotor (12) as claimed in claim 2, wherein the rotor (12) has at least one radial magnetic field.

6. The motor device utilizing magnetic force to drive the rotor (12) as claimed in claim 3, wherein the rotor (12) has at least one radial magnetic field.

7. The motor device utilizing magnetic force to drive the rotor (12) as claimed in claim 4, wherein the rotor (12) has at least one radial magnetic field.

8. The motor device utilizing magnetic force to drive the rotor (12) as claimed in claim 1, wherein the spiral stripe (122) of the rotor (12) has a magnetic field.

9. The motor device utilizing magnetic force to drive the rotor (12) as claimed in claim 2, wherein the spiral stripe (122) of the rotor (12) has a magnetic field.

10. The motor device utilizing magnetic force to drive the rotor (12) as claimed in claim 3, wherein the spiral stripe (122) of the rotor (12) has a magnetic field.

11. The motor device utilizing magnetic force to drive the rotor (12) as claimed in claim 4, wherein the spiral stripe (122) of the rotor (12) has a magnetic field.

12. The motor device utilizing magnetic force to drive the rotor (12) as claimed in claim 3, wherein the controlling unit (13) further includes at least one stator section (132) containing magnetizable material, the stator section (132) being adjacent to the rotor (12) and positioned between the coil (131) and the rotor (12).

13. The motor device utilizing magnetic force to drive the rotor (12) as claimed in claim 4, wherein the controlling unit (13) further includes at least one stator section (132) containing magnetizable material, the stator section (132) being adjacent to the rotor (12) and positioned between the coil (131) and the rotor (12).

14. The motor device utilizing magnetic force to drive the rotor (12) as claimed in claim 6, wherein the controlling unit (13) further includes at least one stator section (132) containing magnetizable material, the stator section (132) being adjacent to the rotor (12) and positioned between the coil (131) and the rotor (12).

15. The motor device utilizing magnetic force to drive the rotor (12) as claimed in claim 7, wherein the controlling unit (13) further includes at least one stator section (132) containing magnetizable material, the stator section (132) being adjacent to the rotor (12) and positioned between the coil (131) and the rotor (12).

16. The motor device utilizing magnetic force to drive the rotor (12) as claimed in claim 10, wherein the controlling unit (13) further includes at least one stator section (132) containing magnetizable material, the stator section (132) being adjacent to the rotor (12) and positioned between the coil (131) and the rotor (12).

17. The motor device utilizing magnetic force to drive the rotor (12) as claimed in claim 11, wherein the controlling unit (13) further includes at least one stator section (132) containing magnetizable material, the stator section (132) being adjacent to the rotor (12) and positioned between the coil (131) and the rotor (12).

18. The motor device utilizing magnetic force to drive the rotor (12) as claimed in claim 12, wherein the stator section (132) is a block body and positioned at one end of the rotor (12).

19. The motor device utilizing magnetic force to drive the rotor (12) as claimed in claim 13, wherein the stator section (132) is a block body and positioned at one end of the rotor (12).

20. The motor device utilizing magnetic force to drive the rotor (12) as claimed in claim 14, wherein the stator section (132) is a block body and positioned at one end of the rotor (12).

21. The motor device utilizing magnetic force to drive the rotor (12) as claimed in claim 15, wherein the stator section (132) is a block body and positioned at one end of the rotor (12).

22. The motor device utilizing magnetic force to drive the rotor (12) as claimed in claim 16, wherein the stator section (132) is a block body and positioned at one end of the rotor (12).

23. The motor device utilizing magnetic force to drive the rotor (12) as claimed in claim 17, wherein the stator section (132) is a block body and positioned at one end of the rotor (12).

24. The motor device utilizing magnetic force to drive the rotor (12) as claimed in claim 12, wherein the stator section (132) is a block body and positioned on one side of the rotor (12).

25. The motor device utilizing magnetic force to drive the rotor (12) as claimed in claim 13, wherein the stator section (132) is a block body and positioned on one side of the rotor (12).

26. The motor device utilizing magnetic force to drive the rotor (12) as claimed in claim 14, wherein the stator section (132) is a block body and positioned on one side of the rotor (12).

27. The motor device utilizing magnetic force to drive the rotor (12) as claimed in claim 15, wherein the stator section (132) is a block body and positioned on one side of the rotor (12).

28. The motor device utilizing magnetic force to drive the rotor (12) as claimed in claim 16, wherein the stator section (132) is a block body and positioned on one side of the rotor (12).

29. The motor device utilizing magnetic force to drive the rotor (12) as claimed in claim 17, wherein the stator section (132) is a block body and positioned on one side of the rotor (12).

30. The motor device utilizing magnetic force to drive the rotor (12) as claimed in claim 12, wherein the stator section (132) includes two block bodies, one of the block bodies being positioned at one end of the rotor (12), while the other of the block bodies being positioned on one side of the rotor (12).

31. The motor device utilizing magnetic force to drive the rotor (12) as claimed in claim 13, wherein the stator section (132) includes two block bodies, one of the block bodies being positioned at one end of the rotor (12), while the other of the block bodies being positioned on one side of the rotor (12).

32. The motor device utilizing magnetic force to drive the rotor (12) as claimed in claim 14, wherein the stator section (132) includes two block bodies, one of the block bodies being positioned at one end of the rotor (12), while the other of the block bodies being positioned on one side of the rotor (12).

33. The motor device utilizing magnetic force to drive the rotor (12) as claimed in claim 15, wherein the stator section (132) includes two block bodies, one of the block bodies being positioned at one end of the rotor (12), while the other of the block bodies being positioned on one side of the rotor (12).

34. The motor device utilizing magnetic force to drive the rotor (12) as claimed in claim 16, wherein the stator section (132) includes two block bodies, one of the block bodies being positioned at one end of the rotor (12), while the other of the block bodies being positioned on one side of the rotor (12).

35. The motor device utilizing magnetic force to drive the rotor (12) as claimed in claim 17, wherein the stator section (132) includes two block bodies, one of the block bodies being positioned at one end of the rotor (12), while the other of the block bodies being positioned on one side of the rotor (12).

36. The motor device utilizing magnetic force to drive the rotor (12) as claimed in claim 18, 19, 20, 21, 22 or 23, wherein the block body is a hollow cylindrical body.

37. The motor device utilizing magnetic force to drive the rotor (12) as claimed in claim 24, 25, 26, 27, 28 or 29, wherein the block body is an arced piece.

38. The motor device utilizing magnetic force to drive the rotor (12) as claimed in claim 30, 31, 32, 33, 34 or 35, wherein one of the block bodies is a hollow cylindrical body, while the other of the block bodies is an arced piece.

39. The motor device utilizing magnetic force to drive the rotor (12) as claimed in claim 30, 31, 32, 33, 34 or 35, wherein the block body positioned on one side of the rotor (12) has a permanent magnetic field, the direction of the magnetic lines of the permanent magnetic field being different from the direction of the magnetic lines created by the coil.

40. The motor device utilizing magnetic force to drive the rotor (12) as claimed in claim 3, 6 or 10, wherein the controlling unit (13) further includes a compensator (133) positioned on outer side of the coil (131) for compensating the magnetic force acting on the rotor (12), the compensator (133) including a first piece (133') and a second piece (133"), the first piece (133') being selected from the group consisting of a block body, an arced piece and a hollow cylindrical body, the first piece (133') being selected from the group consisting of being positioned on outer side of the coil (131) and around the coil, the second piece (133") being a hollow cylindrical body positioned at one end of the main body (11), the first piece (133') being selected from the group consisting of being connected with and abutting against the second piece (133").

41. The motor device utilizing magnetic force to drive the rotor (12) as claimed in claim 18, 19, 20, 21, 22 or 23, wherein the controlling unit (13) further includes a compensator (133) positioned on outer side of the coil (131) for compensating the magnetic force acting on the rotor (12), the compensator (133) including a first piece (133') and a second piece (133"), the first piece (133') being selected from the group consisting of a block body, an arced piece and a hollow cylindrical body, the first piece (133') being selected from the group consisting of being positioned on outer side of the coil (131) and around the coil, the second piece (133") being a hollow cylindrical body positioned at one end of the main body (11), the first piece (133') being selected from the group consisting of being connected with and abutting against the second piece (133"), the stator section (132) being selected from the group consisting of being connected with and abutting against the second piece (133").

42. The motor device utilizing magnetic force to drive the rotor (12) as claimed in claim 24, 25, 26, 27, 28 or 29, wherein the controlling unit (13) further includes a compensator (133) positioned on outer side of the coil (131) for compensating the magnetic force acting on the rotor (12), the compensator (133) including a first piece (133') and a second piece (133"), the first piece (133') being selected from the group consisting of a block body, an arced piece and a hollow cylindrical body, the first piece (133') being selected from the group consisting of being positioned on outer side of the coil (131) and around the coil, the second piece (133") being a hollow cylindrical body positioned at one end of the main body (11), the first piece (133') being selected from the group consisting of being connected with and abutting against the second piece (133").

43. The motor device utilizing magnetic force to drive the rotor (12) as claimed in claim 30, 31, 32, 33, 34 or 35, wherein the controlling unit (13) further includes a compensator (133) positioned on outer side of the coil (131) for compensating the magnetic force acting on the rotor (12), the compensator (133) including a first piece (133') and a second piece (133"), the first piece (133') being selected from the group consisting of a block body, an arced piece and a hollow cylindrical body, the first piece (133') being selected from the group consisting of being positioned on outer side of the coil (131) and around the coil, the second piece (133") being a hollow cylindrical body positioned at one end of the main body (11), the first piece (133') being selected from the group consisting of being connected with and abutting against the second piece (133"), the stator section (132) positioned in one end of the rotor (12) being selected from the group consisting of being connected with and abutting against the second piece (133").

44. The motor device utilizing magnetic force to drive the rotor (12) as claimed in claim 40, wherein the first piece (133') and the second piece (133") are selected from the group consisting of a magnetic conductive material and possessing a permanent magnetic field.

45. The motor device utilizing magnetic force to drive the rotor (12) as claimed in claim 40, wherein the first piece (133') has a permanent magnetic field, while the second piece (133") is made from a magnetic conductive material.

46. The motor device utilizing magnetic force to drive the rotor (12) as claimed in claim 41, wherein the first piece (133') and the second piece (133") are selected from the group consisting of a magnetic conductive material and possessing a permanent magnetic field.

47. The motor device utilizing magnetic force to drive the rotor (12) as claimed in claim 41, wherein the first piece (133') has a permanent magnetic field, while the second piece (133") is made from a magnetic conductive material.

48. The motor device utilizing magnetic force to drive the rotor (12) as claimed in claim 42, wherein the first piece (133') and the second piece (133") are selected from the group consisting of a magnetic conductive material and possessing a permanent magnetic field.

49. The motor device utilizing magnetic force to drive the rotor (12) as claimed in claim 42, wherein the first piece (133') has a permanent magnetic field, while the second piece (133") is made from a magnetic conductive material.

50. The motor device utilizing magnetic force to drive the rotor (12) as claimed in claim 42, wherein the stator section (132) and the first piece (133') unsimultaneously have a permanent magnetic field.

51. A motor device utilizing magnetic force to drive a rotor (12), comprising:
a main body (11) having an internal chamber (112);
a magnetic rotor (12) swingably disposed in the chamber (112), the rotor (12) being a column body with a certain length, the rotor (12) having a profile corresponding to a configuration of a peripheral wall of the chamber (112);
a controlling unit (13) disposed on outer side of the main body (11), the controlling unit (13) including at least one coil (131) connected to at least one circuit, the coil (131) being wound around the main body (11), the circuit serving to apply an alternate current to the coil (131) so as to provide a magnetic force to the rotor (12) for driving the rotor (12) to at least rotate.

52. The motor device utilizing magnetic force to drive the rotor (12) as claimed in claim 51, wherein the rotor (12) is a cylindrical body.

53. The motor device utilizing magnetic force to drive the rotor (12) as claimed in claim 51, wherein a rotational axis of the rotor (12) does not coincide with a geometrical axis of the rotor (12).

54. The motor device utilizing magnetic force to drive the rotor (12) as claimed in claim 51, wherein a rotational axis of the rotor (12) does not coincide with a gravity axis of the rotor (12).
